Europäisches Patentamt

European Patent Office

Office européen des brevets

(11) Veröffentlichungsnummer : **0 046 258**
**B1**

# (12) EUROPÄISCHE PATENTSCHRIFT

(45) Veröffentlichungstag der Patentschrift :
02.05.84

(51) Int. Cl.³ : **H 04 B  7/08**

(21) Anmeldenummer : **81106236.3**

(22) Anmeldetag : **10.08.81**

(54) **Raumdiversity-Empfänger mit ZF-Kombinator.**

(30) Priorität : **14.08.80 DE 3030811**

(43) Veröffentlichungstag der Anmeldung :
**24.02.82 Patentblatt 82/08**

(45) Bekanntmachung des Hinweises auf die Patenterteilung : **02.05.84 Patentblatt 84/18**

(84) Benannte Vertragsstaaten :
**GB IT NL**

(56) Entgegenhaltungen :
**DE-A- 2 727 975**
**DE-B- 1 076 753**
**DE-B- 1 248 121**
**GB-A-   834 979**
**US-A- 3 195 049**
**US-A- 4 232 399**

(73) Patentinhaber : **SIEMENS AKTIENGESELLSCHAFT**
**Berlin und München Wittelsbacherplatz 2**
**D-8000 München 2 (DE)**

(72) Erfinder : **Ulmer, Wolgang, Dipl.-Ing.**
**Grünstrasse 9**
**D-8000 München 70 (DE)** .
Erfinder : **Peterknecht, Klaus, Dipl.-Ing.**
**Graubündener Strasse 49**
**D-8000 München 71 (DE)**

## Raumdiversity-Empfänger mit ZF-Kombinator

Die Erfindung bezieht sich auf einen Raumdiversity-Empfänger, bei dem die Nutzsignale der beiden Empfängerzweige in einer Summierschaltung zusammengeführt sind und bei dem in einem Empfangszweig ein elektronisch gesteuerter Phasenschieber eingeführt ist und auf der Ausgangsseite des Phasenschiebers zwischen den beiden Empfangszweigen eine Phasenvergleichsschaltung angeschaltet ist, deren Ausgangssignal den Phasenschieber steuert, unter Verwendung eines abhängig von der Richtung der Phasenabweichung in seiner Zählrichtung gesteuerten Vorwärts-Rückwärts-Zählers, dessen jeweilige Stellung über einen Speicher in eine dieser zugeordnete Stellung des schrittweise einstellbaren Phasenschiebers umgesetzt wird.

Bei Raumdiversity besteht das Problem, daß zwei gleichfrequente Signale phasenrichtig summiert werden sollen. Die Summierung kann in der RF-, ZF- oder BF-Ebene erfolgen. Man spricht dann von einem RF-, ZF- oder BF-Kombinator. Erfolgt die Kombination in der RF- oder ZF-Ebene, so ist durch einen veränderbaren Phasenschieber dafür zu sorgen, daß die durch die wechselnden Ausbreitungsverhältnisse verursachten Phasendifferenzen zwischen den beiden Empfangssignalen ausreichend ausgeglichen werden. Ein besonderes Problem ist dabei die Realisierung eines sogenannten Endlos-Phasenschiebers oder Goniometers mit elektronischen Mitteln und die automatische Steuerung dieses Phasenschiebers.

Ein RF-Kombinator ist beispielsweise durch den Aufsatz « Elektronisches Raumdiversity-System für Richtfunkanlagen » von U.H. Gysel bekannt, erschienen anläßlich einer NTG-Fachtagung für Richtfunk vom 23. bis 25.4.80.

Durch den Bericht « New Generation 6 GHz 1800 Channel/78 Mbits Radio System » von T. Furuya et al. anläßlich der European Microwave Conference 1978 ist ein ZF-Kombinator bekannt.

Ferner ist durch die DE-A1-2 727 975 ein Phasenschieber für Diversity-Anlagen bekannt, der mit Hilfe eines Zählers arbeitet, dem ein in einem Spannungs-Impulsfrequenz-Wandler in einen Impulszug umgesetztes Regelsignal zugeführt wird. An einem weiteren Ausgang dieses Wandlers erscheint ein Signal, das die Änderungsrichtung des Regelsignales angibt. Die Impulse des Wandlers werden in dem als Aufwärts-Abwärts-Zähler ausgebildeten Zähler mit der durch das zweite Ausgangssignal des Wandlers vorgegebenen Zählrichtung gezählt. Der Zähler ist beispielsweise ein 8-Bit-Ringzähler, bei welchem 256 Zählstände möglich sind, welche einer Phasendrehung von 360° entsprechen. Die Stellung des Zählers entspricht im ausgeregelten Zustand der jeweils momentan nötigen Phasenverschiebung, damit das Hilfssignal und das Hauptsignal miteinander in Phase sind.

Der Erfindung liegt die Aufgabe zugrunde, für einen Raumdiversity-Empfänger mit ZF-Kombinator eine Lösung mit möglichst geringem elektrischen Störeinfluß bei einfachem Aufbau anzugeben.

Diese Aufgabe wird bei einem Raumdiversity-Empfänger der eingangs beschriebenen Art gemäß der Erfindung in der Weise gelöst, daß die Nutzsignale in der ZF-Ebene zusammengeführt sind, daß der Phasenvergleichsschaltung das aus dem einen Empfangszweig ausgekoppelte Signal über einen automatisch geregelten Verstärker ohne zusätzliche Phasendrehung und das aus dem anderen Empfangszweig ausgekoppelte Signal über einen gleichen automatisch geregelten Verstärker und ein 90°-Phasendrehglied zugeführt wird und deren Ausgangssignal einerseits auf einen Komparator gegeben wird, der die Zählrichtung des Vorwärts-Rückwärts-Zählers steuert, und andererseits in einer Quadrierschaltung quadriert wird und abhängig von seinem Absolutwert die Taktfrequenz eines den Vorwärts-Rückwärts-Zähler ansteuernden Taktgenerators bestimmt.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen :

Figur 1 einen Raumdiversity-Empfänger mit ZF-Kombinator im Blockschaltbild,

Figur 2 ein Prinzipschaltbild des digitalen Phasenschiebers,

Figur 3 eine Teildarstellung des Phasenschiebers nach Fig. 2 und

Figur 4 eine graphische Darstellung der einzelnen Phasenschritte.

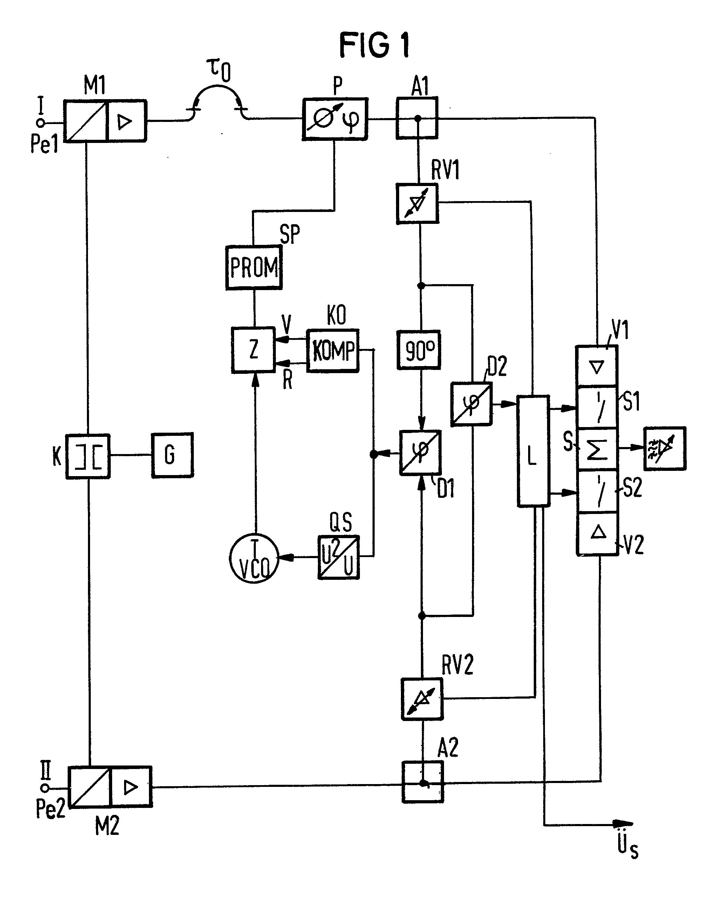

Bei dem in Fig. 1 dargestellten Raumdiversity-Empfänger sind die beiden Eingänge der Empfangswege mit I und II bezeichnet. An ihnen tritt das Empfangssignal in der RF-Lage mit dem Pegel Pe1 bzw. Pe2 auf. Jeder Empfangszweig enthält einen Empfangsumsetzer M1 bzw. M2 mit einem ZF-Vorverstärker, die aus einem gemeinsamen Empfangsoszillator G über einen 3-dB-Koppler K gespeist werden. In einem Empfangszweig ist ein elektronisch gesteuerter Phasenschieber P angeordnet, zu dem eingangsseitig ein ZF-Kabel mit der Laufzeit $\tau_0$ in Reihe geschaltet ist. Dieses Kabel gleicht zusammen mit der Grundlaufzeit des Phasenschiebers den Längenunterschied der Antennenzuleitungen zu den Empfangszweigen aus, wobei angenommen wird, daß die längere Antennenzuleitung an den Eingang II angeschlossen ist, und der Längenunterschied größer als die elektrische Länge des Phasenschiebers P ist. Die beiden Empfangszweige werden über jeweils eine Abzweigschaltung A1 bzw. A2, an denen Signale aus den Empfangszweigen in eine Phasenvergleichsschaltung ausgekoppelt werden, Verstärker V1 bzw. V2 und Abschalter S1 bzw. S2 in einer Summierschaltung S zusammengeführt. An die Summierschaltung ist ausgangsseitig die ZF-Einheit mit ZF-Hauptverstärker, Entzerrern usw. wie beim einfachen Empfänger angeschlossen.

Die Phasenvergleichsschaltung enthält jeweils einen mit der Abzweigschaltung A1 bzw. A2 verbundenen automatisch geregelten Verstärker RV1 bzw. RV2, der für das aus dem Empfängerzweig mit dem Phasenschieber P ausgekoppelte Signal über ein 90°-Phasendrehglied und für das aus dem anderen Empfangszweig ausgekoppelte Signal direkt mit einem Phasendiskriminator D1 verbunden ist. Das Ausgangssignal des Phasendiskriminators D1 wird einerseits auf einen Komparator KO gegeben, der abhängig von der Richtung der Phasenabweichung die Zählrichtung eines Vorwärts/Rückwärtszählers Z steuert, und andererseits in einer Quadrierschaltung QS quadriert und bestimmt abhängig von seinem Absolutwert die Taktfrequenz eines den Vorwärts/Rückwärtszählers Z ansteuernden, zwischen Quadrierschaltung QS und Zähler Z eingeschalteten Taktgenerators T, der beispielsweise aus einem spannungsgeregelten Oszillator (VCO) besteht. Dieser ist bei kleinen Phasenabweichungen abgeschaltet. Bei größeren Phasenabweichungen steigt die Frequenz mit steigender Phasenabweichung an. Dem Zähler Z ist ein Speicher SP, beispielsweise ein PROM nachgeschaltet, über den die jeweilige Stellung des Zählers Z in eine dieser zugeordnete Stellung des schrittweise einstellbar ausgebildeten Phasenschiebers P umgesetzt wird.

Ein zweiter Phasendiskriminator D2 in der Phasenvergleichsschaltung ist mit seinen Eingängen an den Ausgang der beiden Verstärker RV1 bzw. RV2 angeschlossen. Der Ausgang des Phasendiskriminators D2 ist an eine Logikschaltung L geführt, die an den im Zweig des Phasenschiebers P liegenden Abschalter S1 angeschlossen ist. Von der Logikschaltung L wird ferner ein Überwachungssignal Üs an eine — in der Figur nicht dargestellte — Signalisierungs- und Fehleranzeigeeinrichtung abgegeben. Die Regelspannungen von RV1 und RV2 steuern die Logikschaltung L, die jeweils mit den vor der Summierungsschaltung S liegenden Abschaltern S1 und S2 verbunden ist.

Der Phasenschieber P wird über den Speicher SP, den Zähler Z, den Taktgenerator T, die Quadrierschaltung QS und den Komparator KO gesteuert. Damit können Phasenänderungen des Funkfeldes beliebiger Größe schrittweise ausgeregelt werden. Der Phasenschieber wird so ausgeregelt, daß unabhängig von der Phase der ankommenden zwei RF-Signale die Phase der an der Summierschaltung S anliegenden Signale etwa gleich bleibt. Bei Phasengleichheit der beiden Signale in der Summierschaltung liefert der Phasendiskriminator D1 die Ausgangsspannung 0.

Der Speicher SP, z. B. ein PROM, wird durch den Vorwärts/Rückwertszähler Z angesteuert, der beispielsweise von 0 bis 55 zählt. Durch Anlegen des Taktsignales des Taktgenerators T an den Zähler Z kann die Signalphase in beiden Richtungen um beliebig große Phasenwinkel schrittweise gedreht werden. Die Taktfrequenz des Taktgenerators T (VCO) wird dabei abhängig von der Größe der Phasenabweichung (Phasenablage) gesteuert. Über den Komparator KO wird die Zählrichtung gesteuert. Die Regelung wird in einem gewissen Phasenbereich (z. B. + 5°) dadurch stillgelegt, daß bei kleinen Phasenabweichungen die Schwingung des Taktgenerators T abgeschaltet wird.

Der zweite Phasendiskriminator D2 in der Phasenvergleichsschaltung überwacht die absolute Phasendifferenz zwischen den Nutzsignalen. Wird diese z. B. wegen eines Gerätefehlers zu groß (beispielsweise größer ± 60°), so wird der Weg, in dem der Phasenschieber P liegt, gesperrt. Dies erfolgt über die dem Phasendiskriminator D2 nachgeschaltete Logikschaltung L, die ausgangsseitig mit dem Abschalter S1 verbunden ist, der in dem den Phasenschieber P enthaltenen Empfangszweig liegt.

Falls die Eingangsleistungen der beiden Empfangszweige stark unterschiedlich werden (z. B. größer 8 dB), wird durch die von den Regelspannungen von RV1 und RV2 gesteuerte Logikschaltung L über die der Summierungsschaltung S vorgeschalteten Abschalter S1 bzw. S2 der Empfangszweig mit der kleineren Eingangsleistung gesperrt und damit eine Verschlechterung des Signal-Geräuschabstandes im Ausgang der Summierschaltung vermieden.

Der Phasenschieber P ist mit Hilfe von Diodenschaltern in diskreten Schritten einstellbar. Dies hat den Vorteil, daß der im Signalweg liegende Phasenschieber praktisch nur aus linearen Bauelementen besteht und das Signal auch bei dessen maximaler Amplitude nicht verzerrt. Von Vorteil ist ferner, daß der digitale Phasenschieber von der digitalen Steuerungselektronik direkt gesteuert werden kann, also ohne Zwischenschaltung von Digital/Analog-Wandlern.

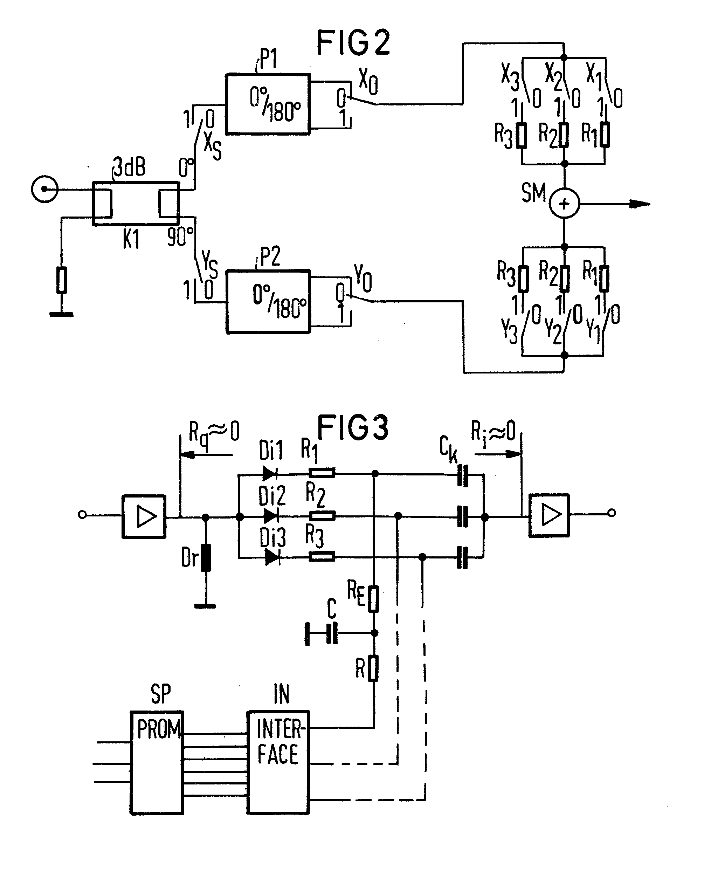

Fig. 2 zeigt das Prinzipschaltbild des Phasenschiebers. Die Diodenschalter sind dabei als Relaiskontakte dargestellt. Der Phasenschieber besteht aus einem 0°/90°-3dB-Koppler K1, in dem das Signal in zwei gleich große, um 90° verschobene Komponenten aufgeteilt wird, und aus zwei in den Ausgangszweigen des Kopplers K1 angeordneten weiteren steuerbaren 0°/180°-Phasenschiebern P1, P2, durch die jedes Signal unabhängig um 180° gedreht werden kann. Im Verbindungsweg zwischen dem 0°-Ausgang des Kopplers K1 und dem einen 0°/180°-Phasenschieber P1 ist ein Schalter $x_S$ mit den Schaltzuständen 1 und 0 eingeschaltet, zwischen dem 90°-Ausgang des Kopplers K1 und dem anderen 0°/180°-Phasenschieber P2 ein Schalter $Y_S$ mit den Schaltzuständen 1 und 0. Ausgangsseitig ist den 0°/180°-Phasenschiebern P1, P2 jeweils ein Schalter $x_0$, $y_0$ mit den Schaltzuständen 0 und 1 nachgeschaltet. Weiter ist in jedem Zweig der 0°/180°-Phasenschieber P1, P2 ein Widerstandsnetzwerk eingeschaltet, die an einem Summationspunkt SM zusammengeführt sind. Jedes Widerstandsnetzwerk besteht aus der Parallelschaltung dreier Widerstände R1, R2, R3, zu denen jeweils ein Schalter $x_1$, $x_2$, $x_3$ bzw. $y_1$, $y_2$, $y_3$ mit den Schaltzuständen 1 und 0 in Reihe geschaltet ist. Durch die Widerstandsnetzwerke, deren Widerstände im Verhältnis 1 : 2 : 4 stehen, kann jedes Signal in der Größe auf 8 gleiche Amplitudenstufen eingestellt werden (Addition des Stromes am Summationspunkt). Die Phasenschritte werden dadurch in vorteilhafter Weise möglichst klein gehalten und auch die dabei auftretenden Amplitudenänderungen, wodurch man eine gute Annäherung an die Kreisform erhält. Die beiden gewichteten Signale werden wieder addiert und bilden nun ein Summensignal, das entsprechend der Einstellung der verschiedenen Diodenschalter in der Phase in diskreten Schritten zwischen 0° und 360° gedreht werden kann. Dabei ist die Amplitudenänderung kleiner ± 0,6 dB. Die Schalter $x_S$ und $y_S$ bewirken dabei eine Sperrung des x- bzw. des y-Weges und verbessern die evtl. unzureichende Öffnung der Diodenschalter $x_1$, $x_2$, $x_3$ bzw. $y_1$, $y_2$, $y_3$ in den Widerstandsnetzwerken. $x_S$ und $y_S$ sind Folgeschalter, die nur dann geöffnet sind, wenn die Amplitudenstufe 0 des x- bzw. y-Weges erreicht werden soll.

Fig. 3 zeigt in einer Teildarstellung einen Zweig des Phasenschiebers mit der Ansteuerung der Dioden Di1, Di2, Di3, die mit den Widerständen R1, R2, R3 des Widerstandsnetzwerkes in Reihe geschaltet sind. Vom Speicher SP wird ein Interface IN gesteuert. Dieses enthält Umschalter, über die wahlweise eine negative Spannung von beispielsweise 24V oder eine positive Spannung von beispielsweise 5V anschaltbar ist, die über ein RC-Glied an die einzelnen Dioden Di1, Di2, Di3 geführt wird, wodurch die als Schalter wirkenden Dioden durchgeschaltet oder gesperrt werden. Durch die RC-Glieder erfolgt die Umschaltung vom Sperrzustand in den Durchlaßbereich der Diodenschalter nicht abrupt, sondern es wird ein stetiger Übergang erreicht. Dadurch werden Geräuschspitzen vermieden. Von den weiteren Elementen der Schaltung ist $R_E$ ein Entkopplungswiderstand, $C_K$ ein Koppelkondensator.

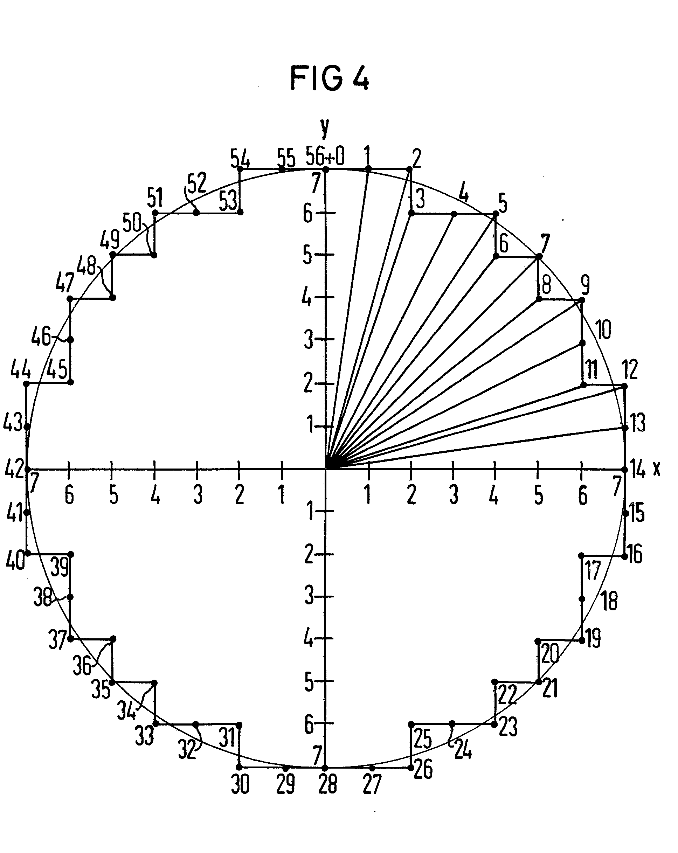

Fig. 4 zeigt in einem Diagramm eine idealisierte Darstellung der vorgesehenen Phasenschritte und der dabei auftretenden Amplitudenänderungen. Im vorliegenden Beispiel ist der größte Phasenschritt $\Delta\varphi = \text{arc tg } 1/7 \approx 8°$. Es sind insgesamt 56 Phasenschritte für 360° vorgesehen, die von 0 (= 56) bis 55 durchnumeriert sind. Diese 56 verschiedenen Stellungen der Diodenschalter sind im Speicher SP eingespeichert und können durch Anlegen der Adressen 0 bis 55 abberufen werden. Von Vorteil ist dabei, daß bei aufeinanderfolgenden Schritten des Phasenschiebers jeweils nur eine Bewegung in einer einzigen Richtung (x- oder y-Richtung) erfolgt, sich also x- und y-Vektoren nicht gleichzeitig zu ändern brauchen.

**Ansprüche**

1. Raumdiversity-Empfänger, bei dem die Nutzsignale der beiden Empfangszweige in einer Summierschaltung (S) zusammengeführt sind und bei dem in einem Empfangszweig ein elektronisch gesteuerter Phasenschieber (P) eingefügt ist und auf der Ausgangsseite des Phasenschiebers (P) zwischen den beiden Empfangszweigen eine Phasenvergleichsschaltung (D1) angeschaltet ist, deren Ausgangssignal den Phasenschieber (P) steuert, unter Verwendung eines abhängig von der Richtung der Phasenabweichung in seiner Zählrichtung gesteuerten Vorwärts-Rückwärts-Zählers (Z), dessen jeweilige Stellung über einen Speicher (SP) in eine dieser zugeordnete Stellung des schrittweise einstellbaren Phasenschiebers (P) umgesetzt wird, dadurch gekennzeichnet, daß die Nutzsignale in der ZF-Ebene zusammengeführt sind, daß der Phasenvergleichsschaltung (D1) das aus dem einen Empfangszweig ausgekoppelte Signal über einen automatisch geregelten Verstärker (RV2) ohne zusätzliche Phasendrehung und das aus dem anderen Empfangszweig ausgekoppelte Signal über einen gleichen automatisch geregelten Verstärker (RV1) und ein 90°-Phasendrehglied zugeführt wird und deren Ausgangssignal einerseits auf einen Komparator (KO) gegeben wird, der die Zählrichtung des Vorwärts-Rückwärts-Zählers (Z) steuert, und andererseits in einer Quadrierschaltung (QS) quadriert wird und abhängig von seinem Absolutwert die Taktfrequenz eines den Vorwärts-Rückwärts-Zähler (Z) ansteuernden Taktgenerators (T) bestimmt.

2. Empfänger nach Anspruch 1, dadurch gekennzeichnet, daß der Phasenschieber (P) ein digitaler Phasenschieber ist bestehend aus einem 0°/90°-3dB-Koppler und zwei weiteren, in je einem Ausgangszweig des 0°/90°-3dB-Kopplers liegenden, steuerbaren 0°/180°-Phasenschiebern (P1, P2), in deren Ausgangszweig an einem Summationspunkt (SM) zusammengeführte Widerstandsnetzwerke angeordnet sind.

3. Empfänger nach Anspruch 2, dadurch gekennzeichnet, daß die Widerstandsnetzwerke aus der Parallelschaltung von mit Schaltern (x1, x2, x3 bzw. y1, y2, y3) in Reihe liegenden Widerständen (R1, R2, R3) bestehen.

4. Empfänger nach Anspruch 3, dadurch gekennzeichnet, daß die Widerstände (R1, R2, R3) der Widerstandsnetzwerke jeweils ein Verhältnis von 1 : 2 : 4 aufweisen.

5. Empfänger nach Anspruch 4, dadurch gekennzeichnet, daß die Schalter (x1, x2, x3 bzw. y1, y2, y3) der Widerstandsnetzwerke sowie weitere, im Verbindungsweg von 0°/90°-3dB-Koppler (K1) 0°/180°/Phasenschiebern (P1, P2) und Widerstandsnetzwerken liegende Schalter ($x_S$, $x_0$ bzw. $y_S$, $y_0$) als Diodenschalter ausgebildet sind.

6. Empfänger nach Anspruch 5, dadurch gekennzeichnet, daß eine die Diodenschalter (Di1, Di2, Di3) ansteuernde Schaltung ein RC-Glied enthält.

7. Empfänger nach einem der Ansprüche 3 bis 6, dadurch gekennzeichnet, daß die einzelnen, den Phasenwinkeln zugeordneten Schalterstellungen im Speicher (SP) abgespeichert sind.

8. Empfänger nach einem der Ansprüche 1 bis 7, dadurch gekennzeichnet, daß der Taktgenerator (T) ein spannungsgeregelter Oszillator (VCO) ist, der bei kleinen Phasenabweichungen abgeschaltet ist und dessen Frequenz bei größerer Phasenabweichung mit steigender Phasenabweichung ansteigt.

9. Empfänger nach einem der Ansprüche 1 bis 8, dadurch gekennzeichnet, daß mit dem Phasenschieber (P) ein Kabel mit der Laufzeit $\tau_0$ in Reihe geschaltet ist.

10. Empfänger nach einem der Ansprüche 1 bis 9, dadurch gekennzeichnet, daß die Regelspannungen der automatisch geregelten Verstärker (RV1, RV2) an eine Logikschaltung (L) angeschaltet sind, deren Ausgänge mit in den einzelnen Empfangszweigen vor der Summierschaltung (S) angeordneten Abschaltern (S1, S2) verbunden sind, und bei größeren Unterschieden der Empfangspegel den Empfangszweig mit dem kleineren Signal sperren.

11. Empfänger nach einem der Ansprüche 1 bis 10, dadurch gekennzeichnet, daß in der Phasenvergleichsschaltung ein zweiter, die absolute Phasendifferenz zwischen den Nutzsignalen überwachender Phasendiskriminator (D2) angeordnet ist, dem die aus den beiden Empfangszweigen ausgekoppelten Signale im Regelfall in gleicher Phasenlage zugeführt werden und dessen Ausgangssignal im Fehlerfall bei größeren Phasenfehlern über die Logikschaltung (L) den im Zweig des Phasenschiebers (P) vor der Summierschaltung (S) liegenden Abschalter (S1) so steuert, daß dieser Zweig gesperrt ist.

## Claims

1. A space-diversity receiver, wherein the useful signals of the two receiving arms are combined in an adder circuit (S), and wherein an electronically controlled phase shift device (P) is interposed in a receiving arm, and at the output end of the phase shift device (P) between the two receiving arms there is connected a phase comparison circuit (D1) whose output signal controls the phase shift device (P), employing a forwards-backwards counter (Z) whose counting direction is controlled in dependence upon the direction of the phase shift and whose particular setting is converted via a store (SP) into an assigned position of the phase shift device (P) which can be adjusted in stepped fashion, characterised in that the useful signals are combined in the IF-plane, that the phase comparison circuit (D1) is supplied with the signal which has been output-coupled from the first receiving arm via an automatically regulated amplifier (RV2) without additional phase rotation and with the signal which has been output-coupled from the other receiving arm via an identical, automatically regulated amplifier (RV1) and a 90°-phase rotation element, and whose output signal is fed on the one hand to a comparator (KO) which controls the counting direction of the forwards-backwards counter (Z) and on the other hand is squared in a squaring circuit (QS) and, in dependence upon its absolute value, determines the clock frequency of a clock pulse generator (T) which serves to drive the forwards-backwards counter (Z).

2. Receiver as claimed in claim 1, characterised in that the phase shift device (P) comprises a digital phase shift device composed of a 0°/90°-3dB-coupler and two further controllable 0°/180° phase shift devices (P1, P2) each of which is located in an output arm of the 0°/90° 3dB-coupler and in the output arms of which are arranged resistance networks combined at a summation point (SM).

3. Receiver as claimed in claim 2, characterised in that the resistance networks comprise the parallel arrangement of resistors (R1, R2, R3) arranged in series with switches (x1, x2, x3 and y1, y2, y3).

4. Receiver as claimed in claim 3, characterised in that the resistors (R1, R2, R3) of the resistance networks have a mutual ratio of 1 : 2 : 4.

5. Receiver as claimed in claim 4, characterised in that the switches (x1, x2, x3 and y1, y2, y3) of the resistance networks and further switches ($x_S$, $x_0$ and $y_S$, $y_0$) arranged in the connection path of 0°/90°-3dB-couplers (K1), 0°/180°-phase shift devices (P1, P2), and resistance networks comprise diode switches.

6. Receiver as claimed in claim 5, characterised in that a circuit which drives the diode switches (Di1, Di2, Di3) includes a RC-element.

7. Receiver as claimed in one of the claims 3 to 6, characterised in that the individual switch positions allocated to the phase angles are stored in the store (SP).

8. Receiver as claimed in one of the claims 1 to 7, characterised in that the clock pulse generator (T) comprises a voltage-regulated oscillator (VCO) which is disconnected in the event of small phase deviations and whose frequency increases in accordance with the increase in the phase deviation in the event of a greater phase deviation.

9. Receiver as claimed in one of the claims 1 to 8, characterised in that the phase shift device (P) is connected in series with a cable with the transit time $\tau_0$.

10. Receiver as claimed in one of the claims 1 to 9, characterised in that the regulating voltages of the automatically regulated amplifiers (RV1, RV2) are connected to a logic circuit (L) whose outputs are connected to circuit breakers (S1, S2) arranged in the individual receiving arms preceding the adder circuit (S) and in the event of considerable differences in the receiving level block the receiving arm which has the smaller signal.

11. Receiver as claimed in one of the claims 1 to 10, characterised in that the phase comparison circuit includes a second phase discriminator (D2) which monitors the absolute phase difference between the useful signals and which is supplied with the signals which have been output-coupled from the two receiving arms, normally in the same phase state, and whose output signal — in the event of a fault — in the case of considerable phase errors controls the circuit breaker (S1) located in the arm of the phase shift device (P) preceding the adder circuit (S), via the logic circuit (L), in such manner that this arm is blocked.

## Revendications

1. Récepteur de diversité spatiale à combinateur MF, dans lequel les signaux utiles des deux branches de réception sont rassemblés dans un circuit de sommation (S) et dans lequel, dans une branche de réception, est inséré un déphaseur (P) commandé par voie électronique et du côté sortie du déphaseur (P) est branché, entre les deux branches de réception, un circuit de comparaison de phases (D1) dont le signal de sortie commande le déphaseur (P), avec mise en œuvre d'un compteur bidirectionnel (Z) dont le sens de comptage dépend du sens de l'écart de phase, et dont la position est convertie par l'intermédiaire d'une mémoire (SP) en une position, associée à la précédente, du déphaseur réglable pas-à-pas, caractérisé par le fait que les signaux utiles sont rassemblés dans le plan MF, qu'au circuit de comparaison de phases (D1) sont rassemblés le signal prélevé dans la branche de réception, par l'intermédiaire d'un amplificateur réglé automatiquement, sans déphasage supplémentaire, et le signal prélevé dans l'autre branche de réception, par l'intermédiaire d'un amplificateur identique (RV1) réglé automatiquement et d'un dispositif de déphasage de 90°, alors que le signal de sortie est appliqué d'une part à un comparateur (KO) qui commande le sens de comptage du compteur bidirectionnel (Z) et est par ailleurs élevé au carré dans un circuit de formation du carré, alors qu'il détermine en fonction de sa valeur absolue la fréquence de cadences d'un générateur de cadence (T) qui commande le compteur bidirectionnel (Z).

2. Récepteur selon la revendication 1, caractérisé par le fait que le déphaseur (P) est un déphaseur numérique qui est constitué par un coupleur 3dB-0°/90° et par deux autres déphaseurs (P1, P2) commandés à 0°/180° et situés respectivement dans une branche de sortie du coupleur 3dB-0°/90°, déphaseurs dans les branches de sortie desquels sont disposés des réseaux de résistances qui sont rassemblés en un point de sommation (SM).

3. Récepteur selon la revendication 2, caractérisé par le fait que les réseaux de résistances sont constitués par des circuits parallèles qui sont formés à l'aide de résistances (R1, R2, R3) montées en série avec des interrupteurs (x1, x2, x3 et y1, y2, y3).

4. Récepteur selon la revendication 3, caractérisé par le fait que les résistances (R1, R2, R3) des réseaux à résistances sont respectivement dans un rapport de 1 : 2 : 4.

5. Récepteur selon la revendication 4, caractérisé par le fait que les interrupteurs (x1, x2, x3 et y1, y2, y3) des réseaux à résistances, de même que d'autres sont des interrupteurs ($x_S$, $x_0$ et $y_S$, $y_0$) réalisés sous la forme d'interrupteurs à diodes, situés dans la voie de liaison de coupleurs 3dB-0°/90° (K1) de déphaseurs 0°/180° (P1, P2) et de réseaux à résistances.

6. Récepteur selon la revendication 5, caractérisé par le fait qu'un circuit commandant les interrupteurs à diodes (Di1, Di2, Di3) comportent un circuit RC.

7. Récepteur selon l'une des revendications 3 à 6, caractérisé par le fait que les différentes positions des interrupteurs associés aux angles de phases, sont mémorisées dans une mémoire (SP).

8. Récepteur selon l'une des revendications 1 à 7, caractérisé par le fait que le générateur de cadence est un oscillateur (VCO) à réglage par la tension, oscillateur qui, pour de faibles écarts de la phase est débranché et dont la fréquence pour des écarts plus importants de la phase, croît avec l'écart croissant de la phase.

9. Récepteur selon l'une des revendications 1 à 8, caractérisé par le fait qu'en série avec le déphaseur (P) est relié un câble à durée de transit $\tau_0$.

10. Récepteur selon l'une des revendications 1 à 9, caractérisé par le fait que les tensions de réglage des amplificateurs (RV1, RV2) réglées automatiquement, sont reliées à un circuit logique (L) dont les sorties sont reliées à des interrupteurs (S1, S2) disposés dans les différentes branches de réception du circuit de sommation (S), et bloquent, pour de grandes différences dans le niveau de réception, la branche de réception à signal le plus petit.

11. Récepteur selon l'une des revendications 1 à 10, caractérisé par le fait que l'on dispose dans le circuit de comparaison de phases un second discriminateur de phases (D2) qui contrôle la différence de phase absolue entre les signaux utiles, discriminateur de phases (D2) auquel sont appliqués, en règle générale avec une même position de phase, les signaux isolés dans les deux branches de réception, et dont le signal de sortie, dans le cas d'une erreur et pour des erreurs de phases importantes, commande, par l'intermédiaire du circuit logique (L) l'interrupteur (S1) qui est situé dans la branche du déphaseur (P), en amont du circuit de sommation (S), de façon que cette branche soit bloquée.

FIG 1

FIG 2

FIG 3

# FIG 4